# EUROPÄISCHE PATENTSCHRIFT

(11) **EP 3 735 818 B1**
(45) Veröffentlichungstag und Bekanntmachung des Hinweises auf die Patenterteilung: **23.08.2023**
(21) Anmeldenummer: 19173747.7
(22) Anmeldetag: 10.05.2019
(51) Int. Cl.: A01D 78/10

(54) **LANDWIRTSCHAFTLICHE MASCHINE**
AGRICULTURAL MACHINE
ENGIN AGRICOLE

(43) Veröffentlichungstag der Anmeldung: 11.11.2020
(73) Patentinhaber: Kverneland Group Kerteminde AS, 5300 Kerteminde (DK)
(72) Erfinder: Hirt, Christian, 78244 Gottmadingen (DE); Lamprecht, Tobias, 78244 Gottmadingen (DE)
(74) Vertreter: Grünecker Patent- und Rechtsanwälte PartG mbB

(56) Entgegenhaltungen:
- EP-A1- 0 460 288
- EP-A1- 0 951 818
- EP-A1- 3 054 760
- EP-A1- 3 245 857
- DE-T2- 69 906 178
- SI-A- 23 892

## Beschreibung

Die Erfindung betrifft eine landwirtschaftliche Maschine gemäß Oberbegriff des Patentanspruchs 1.

Bei der aus SI 23892 A bekannten landwirtschaftlichen Maschine, und zwar einem Kreiselheuer mit vom Tragrahmen geschleppter Mittelmaschine, dient die Höheneinstelleinheit dazu, die Höhe von als Zinken ausgebildeten Werkzeugelementen über dem Boden beziehungsweise eine Schräglage der Drehachse des Werkzeugs einzustellen. Die Schwenkachse des Schwenkhebels, an welchem der Werkzeugrahmen angelenkt ist, ist versetzt zur Hauptfahrwerksachse direkt am Tragrahmen angeordnet. Die Höheneinstelleinheit ist an einem Arm des Schwenkhebels einerseits und an einer Konsole des Tragrahmens andererseits angelenkt. Beim Überfahren von Bodenunebenheiten (Senken bzw. Kuppen) ändert sich der relative Winkel des Tragrahmens gegenüber der Mittelmaschine. Aus der Eingliederung der Höheneinstelleinheit zwischen dem Schwenkarm und dem Tragrahmen resultiert somit der Nachteil, dass solche Änderungen des relativen Winkels des Tragrahmens über den Schwenkarm auf den Werkzeugrahmen übertragen werden, da sich die Schwenkachse um die Hauptfahrwerksachse bewegt, mit dem Resultat, dass die Rechzinken die eingestellte Höhe nicht halten, sondern entweder an einer Stelle ihrer Umlaufbahn sinken und in den Boden einstechen oder zu weit vom Boden abgehoben werden. Das Einstechen der Rechzinken in den Boden führt zur Verschmutzung des bearbeiteten Futters. Zu hoch ausgehobene Rechzinken führen zu einem mangelhaften Arbeitsergebnis beim Bearbeiten des Futters.

Bei der aus EP 3 245 857 A1 bekannten Heuwerbungsmaschine fährt diese in der Transportstellung und der Vorgewende-Zwischenstellung auf abgesenkten und festgestellten Bodenlaufrädern, während Tasträder der Kreisel zusammen mit den Kreiseln ausgehoben sind. In der Arbeitsstellung sind hingegen die Bodenlaufräder des Tragrahmens ausgehoben und fährt die Maschine nur auf den Tasträdern der Kreisel. Beim Durchfahren einer Mulde oder Überfahren einer Kuppe schwenkt der Tragrahmen um eine Achse im Anschlussbereich an den Schlepper, so dass diese Schwenkbewegungen auf die mit dem Tragrahmen in der Arbeitsstellung fest verblockten Kreisel übertragen werden, deren Anstellung zum Boden verändert wird. Bei dem aus EP 0 951 818 A1 bekannten Kreiselheuer sind die zwei mittleren Kreisel an einem Querträger angebracht, der die Anstellung relativ zum Boden einstellt und am hinteren Ende des Tragrahmens festgelegt ist. Beim Durchfahren einer Mulde oder Überfahren einer Kuppe schwenkt der Tragrahmen um die Achse der Bodenlaufräder des Tragrahmen-Fahrwerks. Diese Schwenkbewegungen werden auf die Kreisel übertragen, deren Anstellung zum Boden sich verändert.

Bei der aus DE 699 06 178 T2 bekannten Heuwerbungsmaschine schwenkt in der Arbeitsposition der Tragrahmen beim Durchfahren einer Mulde oder Überfahren einer Kuppe um die Achsen des Fahrwerks des Tragrahmens. Diese Schwenkbewegungen werden auf die Kreisel übertragen, deren Anstellung sich dadurch verändert.

Weiterer Stand der Technik ergibt sich aus EP 3 054 760 A1 und EP 0 460 288 A1.

Der Erfindung liegt die Aufgabe zugrunde, eine landwirtschaftliche Maschine der eingangs genannten Art derart zu verbessern, dass die gewählte Höheneinstellung von Werkzeugelementen der Mittelmaschine beim Überfahren von Bodenunebenheiten erhalten bleibt.

Die gestellte Aufgabe wird mit den Merkmalen des Patentanspruchs 1 gelöst.

Da die Schwenkachse des Schwenkarms mit der Hauptfahrwerksachse zusammenfällt, werden Änderungen des relativen Winkels zwischen dem Tragrahmen und der Mittelmaschine nicht auf den Schwenkarm beziehungsweise die Mittelmaschine übertragen, sodass sich die gewählte Höheneinstellung von Werkzeugelementen der Mittelmaschine beim Überfahren von Bodenunebenheiten nicht ändern wird, sondern ein gleichbleibend gutes Arbeitsergebnis erzielbar ist.

Ein wichtiger Aspekt ist ferner, dass das Stellglied der Höheneinstelleinheit nur am Lagergehäuse und am Schwenkarm angelenkt ist, damit Relativbewegungen des Tragrahmens um die Hauptfahrwerksachse auch vom Stellglied nicht auf die Mittelmaschine übertragen werden.

In einer zweckmäßigen Ausführungsform ist der Schwenkarm ein zweiarmiger Hebel, dessen zwei Arme untereinander einen Winkel < 90° einschließen, wobei der eine Arm in etwa zur Mittelmaschine und der andere Arm nach oben ragt, wobei der Werkzeugrahmen an dem einen Arm und das Stellglied der Höheneinstelleinheit an dem anderen Arm angelenkt sind. Andere Winkelbereiche und/oder Orientierungen der Arme sind möglich.

Das Stellglied der Höheneinstelleinheit kann entweder ein Hydraulikzylinder sein, der in der jeweiligen Einstelllage beispielsweise hydraulisch blockiert ist, oder eine Spannstrebe mit einer Kurbel zur mechanischen Längenänderung der Spannstrebe.

In einer zweckmäßigen Ausführungsform erstrecken sich der Werkzeugrahmen zum Lagergehäuse zur Anlenkung am Schwenkarm schräg nach unten in Fahrtrichtung und das Stellglied der Höheneinstelleinheit den Werkzeugrahmen kreuzend vom Lagergehäuse schräg nach oben in Fahrtrichtung zur Anlenkung am Schwenkarm. Dadurch entsteht eine Art Fachwerk oder Dreiecksverbund, mit welchem die Mittelmaschine in der Arbeitsstellung stabil positioniert wird. Beim Überfahren von Bodenunebenheiten und bei Änderungen des relativen Winkels des Tragrahmens verdreht sich das Fachwerk oder der Dreiecksverbund nur um die Hauptfahrwerksachse, welche der jeweiligen Unebenheit folgt und die Mittelmaschine auf ihrem wenigstens einem Tastrad sauber führt.

In einer zweckmäßigen Ausführungsform umfasst die Mittelmaschine mindestens zwei nebeneinanderliegende Werkzeuge, insbesondere Rechkreisel mit ungesteuerten Zinkenträgern und Rechzinken. Die Mittelmaschine bearbeitet somit den Bodenbereich hinter dem Hauptfahrwerk des Tragrahmens, an welchem weitere außenseitig arbeitende Werkzeuge, wie Rechkreisel, angeordnet sein können, um große Arbeitsbreiten abzudecken.

Günstig ist es, wenn der Schwenkarm auf der Hauptfahrwerksachse im Inneren eines die Hauptfahrwerksachse haltenden, am Ende des Tragrahmens, vorzugsweise abnehmbar, befestigten Lagerbocks angeordnet ist. Der Schwenkarm stützt sich so stabil nahe bei der Längsmitte des Tragrahmens auf der Hauptfahrwerksachse ab und ist im Bereich seiner Schwenkachse durch den Lagerbock gegen Verschmutzungen abgeschirmt.

Ferner kann es zweckmäßig sein, wenn der Abstand der Anlenkung des Stellglieds der Höheneinstelleinheit von der Hauptfahrwerksachse am anderen Arm des Schwenkarms größer ist als der Abstand der Anlenkung des Werkzeugrahmens an dem einen Arm des Schwenkarms von der Hauptfahrwerksachse. Auf diese Weise nutzt der Schwenkarm eine integrierte Übersetzung für präzise Höheneinstellungen

Zwischenzeitlich ist das Werkzeug, z. B. ein Rechkreisel, mit seiner Drehachse unter einem spitzen Winkel zum Boden geneigt, sodass Werkzeugelemente beziehungsweise Rechzinken eine Umlaufbahn haben, die schräg zum Boden liegt.

Anhand der Zeichnung wird eine Ausführungsform des Erfindungsgegenstandes erläutert. Es zeigen:
- Fig. 1: eine Seitenansicht eines Teils einer landwirtschaftlichen Maschine in Arbeitsstellung einer geschleppten Mittelmaschine,
- Fig. 2: eine Seitenansicht ähnlich der von Fig. 1 beim Überfahren einer Kuppe, und
- Fig. 3: eine Seitenansicht ähnlich der von Fig. 1 beim Durchfahren einer Senke.

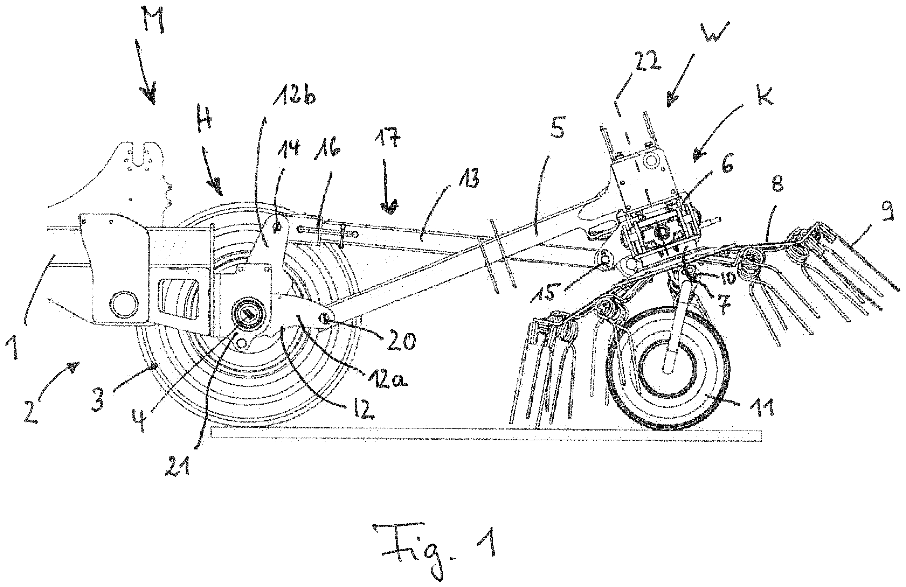

Nachstehend wird eine landwirtschaftliche Maschine M gemäß den Fig. 1 bis 3 anhand des nicht beschränkenden Beispiels eines Kreiselheuers beschrieben. Das erfindungsgemäße Konzept ist jedoch auch für andere landwirtschaftliche Maschinen brauchbar, bei denen eine Mittelmaschine K oder ein angetriebenes Werkzeug W von einem ein Hauptfahrwerk H aufweisenden Tragrahmen 1 geschleppt wird und auch bei Bodenunebenheiten eine vorbestimmte Anstellung relativ zum Boden oder eine vorbestimmte Höheneinstellung einhalten soll, beispielsweise eine Mäheinheit oder ein anderes Bodenbearbeitungsgerät.

Die landwirtschaftliche Maschine M weist den annähernd in Fahrtrichtung (Fig. 1 von rechts nach links) orientierten Tragrahmen 1 auf, der an ein nicht dargestelltes Zugfahrzeug, z. B. einen Schlepper, ankuppelbar ist, und zumindest am in Fig. 1 gezeigten hinteren Ende ein Hauptfahrwerk H mit Bodenlaufrädern 3 besitzt, die sich um eine Hauptfahrwerksachse 4 des Tragrahmens drehen und das hintere Ende des Tragrahmens 1 in vorbestimmter Höhe (Radradius) oberhalb des Bodens führen. Die Hauptfahrwerksachse 4 ist in einem am hinteren Ende des Tragrahmens 1 hier angeflanschten Lagerbock 21 fixiert und wird zum Schleppen einer annähernd in Verlängerung des Tragrahmens 1 angeordneten Mittelmaschine K benutzt. Diese umfasst mindestens ein hier um eine Drehachse 22 drehantreibbares Werkzeug W, nämlich im dargestellten Beispiel einen Rechkreisel mit beispielsweise ungesteuerten Zinkenträgern 8 eines Rotors 7 mit federnden Zinken 9 zur Bearbeitung von auf dem Boden liegendem Futter.

Obwohl in den Fig. 1 bis 3 nur ein Werkzeug W der Mittelmaschine K dargestellt ist, können quer zur Fahrtrichtung zwei oder mehr als zwei Werkzeuge W nebeneinander vorgesehen sein, deren jedes z. B. ein Lagergehäuse 6 aufweist, an welchem der Rechkreisel-Rotor 7 drehbar gelagert und dabei begrenzt kardanisch bewegbar sein kann.

An der Oberseite des Lagergehäuses 6 ist ein Werkzeugrahmen 5 starr festgelegt, der sich in der in Fig. 1 gezeigten Arbeitsstellung beim Befahren z. B. ebenen Bodens durch die landwirtschaftliche Maschine M in Fahrtrichtung schräg nach unten erstreckt und in einer Anlenkung 20 an einem Arm 12a eines Schwenkarms 12 angelenkt ist. Der Schwenkarm 12 ist beispielsweise im Inneren der Lagerbocks 21 untergebracht und besitzt eine Schwenkachse, die mit der Hauptfahrwerksachse 4 zusammenfällt.

Der Schwenkarm 12 ist zweiarmig, wobei der eine Arm 12a, an welchem der Werkzeugrahmen 5 angelenkt ist, von der Hauptfahrwerksachse 4 z. B. in etwa zur Mittelmaschine K weist, während z. B. ein zweiter Arm 12b von der Hauptfahrwerksachse 4 nach oben ragt, derart, dass beispielsweise die beiden Arme 12a, 12b einen Winkel < 90° miteinander anschließen. An dem anderen Arm 12b ist in einer Anlenkung 14 eine Höheneinstelleinheit 17 angelenkt, die in der gezeigten Ausführungsform als ein Stellglied 13 in Form einer Spannstrebe mit einer Kurbel 16 ausgebildet ist, um die Länge der Spannstrebe und die Höheneinstellung beziehungsweise Anstellung als Stellglied 13 der Mittelmaschine ändern zu können.

Alternativ könnte die Höheneinstelleinheit 17 einen Hydraulikzylinder aufweisen, der in der jeweiligen Einstelllage z. B. hydraulisch blockiert ist. Die Höheneinstelleinheit 17 erstreckt sich von der Anlenkung 14 am anderen Arm 12b zu einer Anlenkung 15 am Lagergehäuse 6 der Mittelmaschine K und verläuft dabei in der gezeigten Arbeitsstellung leicht geneigt von oben schräg nach hinten unten, sodass sich der Werkzeugrahmen 5 und die Höheneinstelleinheit 17 überkreuzen.

Optional ist der Abstand der Anlenkung 14 von der Hauptfahrwerksachse 4 größer als der Abstand der Anlenkung 20 von der Hauptfahrwerksachse 4, um in diesen Hebelmechanismus einen vorbestimmten Übersetzungsfaktor einzugliedern.

Durch die Schrägstellung der Drehachse 22 der Mittelmaschine K schließt die Ebene der Umlaufbahn der hier ungesteuerten Zinken 9 einen Winkel α mit dem Boden im Bereich vor wenigstens einem über einen Radträger 10 am Lagergehäuse 6 abgestützten Tastrad 11 ein. Der Winkel der Drehachse 22 der Mittelmaschine K relativ zum Boden im Bereich des Tastrades 11 beträgt somit 90° - α. Die Größe des Winkels α lässt sich durch Ändern der Wirklänge der Höheneinstelleinheit 17 (hydraulisch oder mechanisch oder elektromechanisch) an die gewünschte Arbeitsweise der Mittelmaschine K anpassen.

An der Mittelmaschine K können seitlich weitere Werkzeuge wie Rechkreisel in unterschiedlichen Abständen angeordnet sein, um eine größere Arbeitsbreite zu erzielen. Die Mittelmaschine K bearbeitet hauptsächlich den Bereich hinter dem Hauptfahrwerk H des Tragrahmens 1.

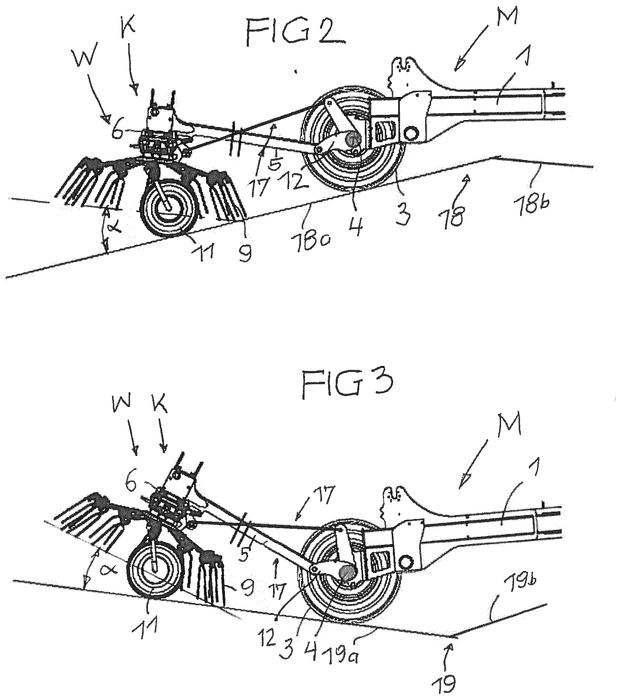

Fig. 2 verdeutlicht die landwirtschaftliche Maschine M beim Überfahren einer Kuppe 18, beispielsweise gebildet durch einen Anstieg 18a und ein anschließendes Gefälle 18b.

Im Vergleich mit Fig. 1 ist in Fig. 2 erkennbar, dass sich der Winkel des Tragrahmens 1 relativ zur Mittelmaschine K bzw. dem Werkzeug W ändert, sobald der Schlepper die Kuppe 18 passiert hat und bis die Räder 3 des Hauptfahrwerks die Kuppe 18 erreichen. Da jedoch der Schwenkarm 12 dann nur um die Hauptfahrwerksachse 4 schwenkt, verändert sich der eingestellte Winkel α trotz der Änderung des relativen Winkels des Tragrahmens 1 nicht, da die Winkeländerung des Tragrahmens 1 nicht auf die Mittelmaschine K übertragen wird.

Fig. 3 verdeutlicht die Situation beim Durchfahren einer Senke 19, beispielsweise gebildet durch ein Gefälle 19a mit einem anschließenden Anstieg 19b des Bodens. Auch bei dieser Fahrsituation ändert sich der relative Winkel des Tragrahmens 1 gegenüber der Mittelmaschine K bzw. dem Werkzeug W, da beispielsweise der Schlepper bereits auf dem Anstieg 19b fährt, während das Hauptfahrwerk H und die Räder 3 wie auch die Mittelmaschine K noch auf dem Gefälle laufen. Da auch bei dieser Winkeländerung des Tragrahmens 1 sich der Schwenkarm 12 nur um die Hauptfahrwerksachse 4 verdreht, bleibt der eingestellte Winkel α der Umlaufbahn der Zinken 9 zum Boden unverändert, wie durch den sich kreuzenden Fachwerkverbund zwischen dem Werkzeugrahmen 5 und der Höheneinstelleinheit 17 und dem Schwenkarm 12 festgelegt.

Der eingestellte Winkel α wird auch beim Überfahren der Kuppe 18 in Fig. 2 bzw. beim Durchfahren der tiefsten Stelle der Senke 19 in Fig. 3 durch die Mittelmaschine K mit dem Tastrad 11 im Wesentlichen gehalten, da das Hauptfahrwerk H bereits wieder auf dem Gefälle 18b bzw. dem Anstieg 19b läuft und dadurch die Hauptfahrwerksachse 4 den Werkzeugrahmen 5 in Fig. 2 absenkt und in Fig. 3 anhebt.

Die landwirtschaftliche Maschine M kann einen weiteren Stelltrieb (nicht gezeigt) aufweisen, beispielsweise um die Mittelmaschine in eine Transportstellung um die Hauptfahrwerksachse 4 hochzuschwenken. Ferner ist in den Fig. eine Antriebsverbindung zur Mittelmaschine beispielsweise entlang des Tragrahmens nicht dargestellt, mit der das Werkzeug W der Mittelmaschine K z. B. um die Drehachse 22 angetrieben wird.

## Patentansprüche

1. Landwirtschaftliche Maschine (M), insbesondere Kreiselheuer, mit einem ein Hauptfahrwerk (H) mit einer Hauptfahrwerksachse (4) aufweisenden Tragrahmen (1) und einer an den Tragrahmen (1) gekuppelten Mittelmaschine (K), die wenigstens ein drehantreibbares, an einem Lagergehäuse (6) wenigstens ein Tastrad (11) umfassendes Werkzeug (W) aufweist, das über einen Werkzeugrahmen (5) an einem relativ zum Tragrahmen (1) um eine Schwenkachse schwenkbaren Schwenkarm (12) angelenkt ist, und mit einer ein Stellglied (13) aufweisenden, zumindest am Schwenkarm (12) angelenkten Höheneinstelleinheit (17) der Mittelmaschine (K), wobei in einer Arbeitsstellung der landwirtschaftlichen Maschine (M) der Tragrahmen (1) über das Hauptfahrwerk (H) und die Mittelmaschine (K) über das wenigstens eine Tastrad (11) auf dem Boden abgestützt sind, **dadurch gekennzeichnet, dass** die Schwenkachse des Schwenkarms (12) direkt in der Hauptfahrwerksachse (4) angeordnet und der Schwenkarm (12) um die Hauptfahrwerksachse (4) relativ zum Tragrahmen (1) schwenkbar ist, sodass sich die gewählte Höheneinstellung von Werkzeugelementen der Mittelmaschine beim Überfahren von Bodenunebenheiten nicht ändert.

2. Landwirtschaftliche Maschine nach Anspruch 1, **dadurch gekennzeichnet, dass** sich das Stellglied (13) der Höheneinstelleinheit (17) vom Lagergehäuse (6) zum Schwenkarm (12) erstreckt.

3. Landwirtschaftliche Maschine nach wenigstens einem der vorhergehenden Ansprüche, **dadurch gekennzeichnet, dass** der Schwenkarm (12) ein zweiarmiger Hebel ist, dessen von der Schwenkachse wegstrebende Arme (12a, 12b) einen Winkel < 90° einschließen, wobei ein Arm (12a) in etwa zur Mittelmaschine (K) und der andere Arm (12b) nach oben ragt, und dass der Werkzeugrahmen (5) an dem einen Arm (12) und das Stellglied (13) an dem anderen Arm (12b) angelenkt sind.

4. Landwirtschaftliche Maschine nach Anspruch 2, **dadurch gekennzeichnet, dass** das Stellglied (13) ein Hydraulikzylinder oder eine Spannstrebe mit Kurbel (16) ist.

5. Landwirtschaftliche Maschine nach wenigstens einem der vorhergehenden Ansprüche, **dadurch gekennzeichnet, dass** sich der Werkzeugrahmen (5) vom Lagergehäuse (6) zu einer Anlenkung (20) am Schwenkarm (12) schräg nach unten und das Stellglied (13) den Werkzeugrahmen (5) kreuzend vom Lagergehäuse (6) schräg nach oben zu einer Anlenkung (14) am Schwenkarm (12) erstrecken.

6. Landwirtschaftliche Maschine nach wenigstens einem der vorhergehenden Ansprüche, **dadurch gekennzeichnet, dass** die Mittelmaschine (K) mindestens zwei quer zur Fahrtrichtung in etwa nebeneinanderliegende Werkzeuge (W), insbesondere Rechkreisel mit ungesteuerten Zinkenträgern (8), umfasst.

7. Landwirtschaftliche Maschine nach Anspruch 1, **dadurch gekennzeichnet, dass** der Schwenkarm (12) auf der Hauptfahrwerksachse (4) im Inneren eines die Hauptfahrwerksachse (4) haltenden, am Ende des Tragrahmens (1), vorzugsweise abnehmbar, befestigten Lagerbocks (21) angeordnet ist.

8. Landwirtschaftliche Maschine Anspruch 5, **dadurch gekennzeichnet, dass** der Abstand der Anlenkung (14) des Stellglieds (13) am anderen Arm (12b) des Schwenkarms (12) von der Hauptfahrwerksachse (4) größer ist als der Abstand der Anlenkung (20) des Werkzeugrahmens (5) von der Hauptfahrwerksachse (4) am einen Arm (12a) des Schwenkarms (12).

9. Landwirtschaftliche Maschine nach Anspruch 6, **dadurch gekennzeichnet, dass** das Werkzeug (W), insbesondere der Rechkreisel, in Arbeitsstellung mit seiner Drehachse in einem spitzen Winkel (90° - α) gegenüber dem Boden geneigt ist.

## Claims

1. Agricultural machine (M), in particular rotary hay making machine, having a carrying frame (1) comprising a main undercarriage (H) having a main undercarriage axis (4), and a mid-machine (K) coupled to the carrying frame (1), the mid-machine (K) having at least one tool (W) being driven for rotation and comprising at least one touching wheel (11) at a bearing housing (6), the tool (W) being linked via a tool frame (5) to a swivel arm (12) which swivels relative to the carrying frame (1) about a swiveling axis, and with a height-setting unit (1) of the mid-machine (K) including an actuator (13) linked at least to the swivel arm (12), wherein in a working position of the agricultural machine (M) the carrying frame (1) by the main undercarriage (H) and the mid-machine (K) by the at least one touching wheel (11) are supported on the ground, **characterized in that** the swivel axis of the swivel arm (12) is arranged directly in the main undercarriage axis (4), and that the swivel arm (12) is swivable about the main undercarriage axis (4) relative to the carrying frame (1), such that the selected height-setting of tool elements of the mid-machine does not change when travelling over uneven ground .

2. Agricultural machine according to claim 1, **characterized in that** the actuator (13) of the height-setting unit (17) extends from the bearing housing (6) to the swivel arm (12).

3. Agricultural machine according to at least one of the preceding claims, **characterized in that** the swivel arm (12) is a lever having two arms (12a, 12b), the arms of which extend away from the swivel axis and include an angle smaller than 90°, wherein one arm (12a) substantially extends to the mid-machine (K) and the other arm (12b) extends upwardly, and that the tool frame (5) is linked to the one arm (12) while the actuator (13) is linked to the other arm (12b).

4. Agricultural machine according to claim 2, **characterized in that** the actuator (13) is a hydraulic cylinder or a spanning strut having a crank lever (16).

5. Agricultural machine according to at least one of the preceding claims, **characterized in that** the tool frame (5) extends from the bearing housing (6) to a linkage (20) at the swivel arm (12) obliquely downwards, and that the actuator (13) extends from the bearing housing (6) obliquely upwardly to a linkage (14) at the swivel arm (12) and crosses the tool frame (5).

6. Agricultural machine according to at least one of the preceding claims, **characterized in that** the mid-machine (K) has at least two tools (W), in particular raking rotors having uncontrolled tine carriers (8), the tools (W) being substantially juxtaposed laterally in relation to the driving direction.

7. Agricultural machine according to claim 1, **characterized in that** the swivel arm (12) is arranged on the main undercarriage axis (4) in the interior of a bearing block (21) holding the main undercarriage axis (4), the bearing block (21) being arranged at an end of the carrying frame (1), preferably in removable fixed fashion.

8. Agricultural machine according to claim 5, **characterized in that** the distance of the linkage (14) of the actuator (13) at the other arm (21b) of the swivel arm (12) from the main undercarriage axis (4) is larger than the distance of the linkage (20) of the tool frame (5) from the main undercarriage axis (4) at the one arm (12a) of the swivel arm (12).

9. Agricultural machine according to claim 6, **characterized in that** the tool (W), in particular the raking rotor, is inclined in working position with its rotational axis with an acute angle (90° - α) in relation to the ground.

## Revendications

1. Engin agricole (M), en particulier faneuse rotative, avec un cadre porteur (1) présentant un châssis principal (H) avec un axe de châssis principal (4) et un engin intermédiaire (K) accouplé au cadre porteur (1), qui présente au moins un outil (W) pouvant être entraîné en rotation, comprenant au moins une roue de palpage (11) sur un boîtier de palier (6), qui est articulé par l'intermédiaire d'un cadre d'outil (5) sur un bras pivotant (12) susceptible de pivoter autour d'un axe de pivotement par rapport au cadre porteur (1), et avec une unité de réglage en hauteur (17) de l'engin intermédiaire (K) présentant un organe de réglage (13) et articulée au moins sur le bras pivotant (12), dans une position de travail de l'engin agricole (M), le cadre porteur (1) s'appuie sur le sol par l'intermédiaire du châssis principal (H) et l'engin intermédiaire (K) s'appuie sur le sol par l'intermédiaire d'au moins une roue de palpage (11), **caractérisée en ce que** que l'axe de pivotement du bras pivotant (12) est disposé directement dans l'axe de châssis principal (4) et que le bras pivotant (12) peut pivoter autour de l'axe de châssis principal (4) par rapport au cadre porteur (1), de sorte que le réglage en hauteur sélectionné des éléments d'outil de la machine centrale ne change pas lors du passage sur des inégalités du sol.

2. Engin agricole selon la revendication 1, **caractérisé en ce que** l'actionneur (13) de l'unité de réglage en hauteur (17) s'étend du logement de palier (6) au bras pivotant (12).

3. Engin agricole selon au moins l'une des revendications précédentes, **caractérisé en ce que** le bras pivotant (12) est un levier à deux bras dont les bras (12a, 12b) s'écartant de l'axe de pivotement forment un angle < 90°, un bras (12a) s'étendant approximativement vers l'engin intermédiaire (K) et l'autre bras (12b) s'étendant vers le haut, et **en ce que** le cadre d'outil (5) est articulé sur un bras (12) et l'actionneur (13) sur l'autre bras (12b).

4. Engin agricole selon la revendication 2, **caractérisé en ce que** l'actionneur (13) est un vérin hydraulique ou une barre de serrage avec manivelle (16).

5. Engin agricole selon au moins l'une des revendications précédentes, **caractérisé en ce que** le cadre d'outil (5) s'étend en oblique vers le bas depuis le logement de palier (6) jusqu'à une articulation (20) sur le bras pivotant (12) et l'actionneur (13) s'étend en oblique vers le haut en croisant le cadre d'outil (5) depuis le logement de palier (6) jusqu'à une articulation (14) sur le bras pivotant (12).

6. Engin agricole selon au moins l'une des revendications précédentes, **caractérisé en ce que** l'engin intermédiaire (K) comprend au moins deux outils (W) à peu près juxtaposés transversalement à la direction de déplacement, en particulier des râteaux rotatifs avec des supports de dents (8) non commandés.

7. Engin agricole selon la revendication 1, **caractérisé en ce que** le bras pivotant (12) est disposé sur l'axe de châssis principal (4) à l'intérieur d'un support (21) maintenant l'axe de châssis principal (4) et fixé, de préférence de manière amovible, à l'extrémité du cadre porteur (1).

8. Engin agricole selon la revendication 5, **caractérisé en ce que** la distance entre l'articulation (14) de l'actionneur (13) sur l'autre bras (12b) du bras pivotant (12) et l'axe de châssis principal (4) est supérieure à la distance entre l'articulation (20) du cadre d'outil (5) et l'axe de châssis principal (4) sur un bras (12a) du bras pivotant (12).

9. Engin agricole selon la revendication 6, **caractérisé en ce que** l'outil (W), en particulier le râteau rotatif, est incliné en position de travail avec son axe de rotation selon un angle aigu (90° - α) par rapport au sol.
